# EUROPEAN PATENT APPLICATION

(11) **EP 3 826 201 A1**
(43) Date of publication of application: **26.05.2021**
(21) Application number: 18926586.1
(22) Date of filing: 20.07.2018
(51) Int. Cl.: H04B 7/08

(54) **USER TERMINAL AND BASE STATION**

(71) Applicant: NTT DoCoMo, Inc., Tokyo 100-6150 (JP)
(72) Inventor: MATSUMURA, Yuki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/027353
(87) International publication number: WO 2020/017044

(57) **Abstract**

A user terminal includes a transmitting section that transmits a beam recovery request and a control section that uses at least one of an uplink control channel, an uplink shared channel, and a demodulation reference signal, for transmission of the beam recovery request. According to one aspect of the present disclosure, it is possible to improve performance in a beam recovery.

## Description

### Technical Field

The present disclosure relates to a user terminal and a base station in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (LTE Rel. 8 to Rel. 14), monitoring of radio link quality (RLM (Radio Link Monitoring)) is performed. When a radio link failure (RLF) is detected through RLM, a user terminal (UE (User Equipment)) is requested to re-establish RRC (Radio Resource Control) connection.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), studies have been conducted about implementation of a procedure for detecting a beam failure to switch to another beam (the procedure may also be referred to as a beam failure recovery (BFR) procedure, a BFR, and so on).

In Rel-15 NR, the BFR is triggered in a case that the quality of all the reference signals for beam failure detection is less than a certain threshold value. Because it is expected that there is no UL beam (UL link) that is available to the UE in a case that all beams are defective, in the BFR that has been studied so far, a beam failure recovery request (BFRQ) is transmitted by using a random access channel (PRACH (Physical Random Access Channel)).

However, in a case that such a beam failure recovery request is used, delay of the beam recovery occurs. As a result, communication throughput might be reduced.

Thus, an object of the present disclosure is to improve performance in a beam recovery.

### Solution to Problem

A user terminal according to one aspect of the present disclosure includes a transmitting section that transmits a beam recovery request and a control section that uses at least one of an uplink control channel, an uplink shared channel, and a demodulation reference signal, for transmission of the beam recovery request.

### Advantageous Effects of Invention

According to one aspect of the present disclosure, it is possible to improve performance in a beam recovery.

### Brief Description of Drawings

FIG. 1 is a diagram to show an example of a beam recovery procedure in Rel-15 NR;
FIG. 2 is a diagram to show an example of the beam recovery request in a case that a base station has beam correspondence;
FIG. 3 is a diagram to show an example of the beam recovery request in a case that a base station does not have beam correspondence;
FIG. 4 is a diagram to show an example of the beam recovery procedure according to a First Aspect;
FIG. 5 is a diagram to show an example of the beam recovery request according to the First Aspect;
FIGS. 6A and 6B are diagrams to show an example of a resource of PUCCH format 0 according to the First Aspect;
FIG. 7 is a diagram to show an example of the beam recovery request using a PUCCH over a plurality of symbols;
FIG. 8 is a diagram to show an example of frequency hopping method 1;
FIG. 9 is a diagram to show an example of frequency hopping method 2;
FIG. 10 is a diagram to show an example of a beam recovery request according to a Second Aspect;
FIG. 11 is a diagram to show an example of a beam recovery request according to a Third Aspect;
FIG. 12 is a diagram to show an example of a schematic structure of a radio communication system according to one embodiment;
FIG. 13 is a diagram to show an example of an overall structure of a base station according to one embodiment;
FIG. 14 is a diagram to show an example of a functional structure of the base station according to one embodiment;
FIG. 15 is a diagram to show an example of an overall structure of a user terminal according to one embodiment;
FIG. 16 is a diagram to show an example of a functional structure of the user terminal according to one embodiment; and
FIG. 17 is a diagram to show an example of a hardware structure of the base station and the user terminal according to one embodiment.

### Description of Embodiments

For NR, studies have been conducted about communication utilizing beamforming. For example, a UE and a base station (for example, a gNB (gNodeB)) may use a beam used to transmit signals (also referred to as a transmit beam, a Tx beam, and so on) and a beam used to receive signals (also referred to as a receive beam, an Rx beam, and so on).

In a case where beamforming is used, communication is expected to be likely to be affected by obstruction by an obstacle, leading to degraded radio link quality. The degraded radio link quality may lead to frequent radio link failures (RLFs). Occurrence of an RLF results in a need for reconnection of the cell, and thus frequent RLFs reduce system throughput.

For NR, studies have been conducted about implementation of a procedure for suppression of occurrence of an RLF in which, in a case where the quality of a specific beam is degraded, switching to another beam is performed (the procedure may be referred to as a beam recovery (BR), a beam failure recovery (BFR), an L1/L2 (Layer 1/Layer 2) beam recovery, and so on). Note that the BFR procedure may also be simply referred to as the BFR.

Note that the beam failure in the present disclosure may be referred to as a link failure.

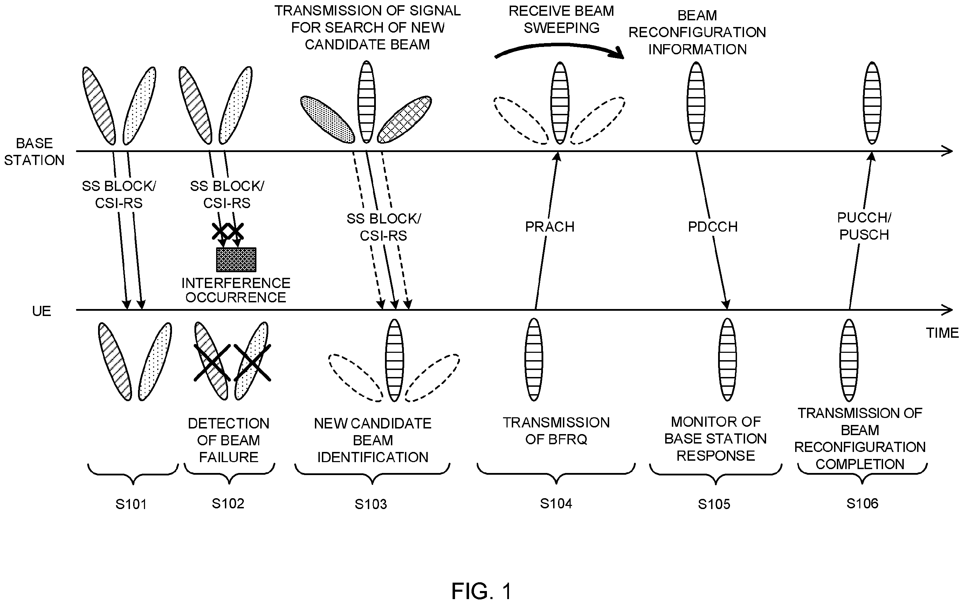

FIG. 1 is a diagram to show an example of the beam recovery procedure in Rel-15 NR. The number of beams and so on are illustrative and are not limited to those in FIG. 1. In an initial state (step S101), the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block and so on.

The RS may be at least one of a primary synchronization signal (PSS (Primary SS)), a secondary synchronization signal (SSS (Secondary SS)), a mobility reference signal (MRS (Mobility RS)), signals included in the SSB, the SSB, the CSI-RS, a demodulation reference signal (DMRS), a beam-specific signal, and so on, or a signal configured by performing expansion, change, or the like of any of the listed signals. The RS measured in step S101 may be referred to as a beam failure detection RS (BFD-RS) and so on.

In step S102, a radio wave from the base station is obstructed, and thus the UE fails to detect the BFD-RS (or reception quality of the RS is degraded). Such obstruction may result from, for example, the adverse effect of an obstacle, fading, interference, or the like between the UE and the base station.

The UE detects a beam failure when a certain condition is satisfied. The UE may detect the occurrence of a beam failure, for example, in a case where a block error rate (BLER) is lower than a threshold for all configured BFD-RSs (BFD-RS resource configurations). When the occurrence of a beam failure is detected, a lower layer of the UE (physical (PHY) layer) may report (indicate) a beam failure instance to a higher layer (MAC layer).

Note that a determination criterion is not limited to the BLER but may be reference signal received power in the physical layer (L1-RSRP (Layer 1 Reference Signal Received Power)). The beam failure detection may be performed based on a downlink control channel (PDCCH (Physical Downlink Control Channel)) or the like instead of or in addition to the RS measurement. The BFD-RS may be expected to be in a quasi-co-location (QCL) relationship with the DMRS of the PDCCH, monitored by the UE.

Here, the QCL is an indicator indicating the statistical property of a channel. For example, the QCL may mean that, in a case where one signal/channel and another signal/channel are in the QCL relationship, at least one of a Doppler shift, a Doppler spread, an average delay, a delay spread, and a spatial parameter (for example, a spatial reception parameter (Spatial Rx Parameter)) can be assumed to be identical (the QCL relationship is satisfied for at least one of these parameters) between the plurality of different signals/channels.

Note that the spatial reception parameter may correspond to the receive beam of the UE (for example, a reception analog beam) and that the beam may be identified based on the spatial QCL. The QCL in the present disclosure (or at least one element of the QCL) may be interpreted as a sQCL (spatial QCL).

Information related to the BFD-RS (for example, indices, resources, the number of RSs, the number of ports, precoding, and so on for the RS), information related to the beam failure detection (BFD) (for example, the above-described threshold), and the like may be configured for (reported to) the UE by using higher layer signaling or the like. The information related to the BFD-RS may be referred to as information related to BFR resources.

In the present disclosure, for example, the higher layer signaling may be any one or any combination of Radio Resource Control (RRC) signaling, Medium Access Control (MAC) signaling, broadcast information, and so on.

For example, the MAC signaling may use MAC control elements (MAC CEs), MAC PDUs (Protocol Data Units), and the like. For example, the broadcast information may be master information blocks (MIBs), system information blocks (SIBs), minimum system information (RMSI (Remaining Minimum System Information)), other system information (OSI), and so on.

In a case of receiving a beam failure instance report from the PHY layer of the UE, the MAC layer of the UE may start a certain timer (that may be referred to as a beam failure detection timer). In a case of receiving the beam failure instance report a specific number of times (for example, *beamFailureInstanceMaxCount* configured by RRC) or more before the timer expires, the MAC layer of the UE may trigger the BFR (for example, initiate any one of the random access procedures described below).

In a case of receiving no report from the UE or receiving a certain signal (beam recovery request in step S104) from the UE, the base station may determine that the UE has detected a beam failure.

In step S103, the UE starts searching for a new candidate beam to be newly used in communication for a beam recovery. By measuring a certain RS, the UE may select a new candidate beam corresponding to the RS. The RS measured in step S103 may be referred to as an RS for new candidate beam identification (NCBI-RS (New Candidate Beam Identification RS)), CBI-RS, CB-RS (Candidate Beam RS), and so on. The NCBI-RS may be the same as or different from the BFD-RS. Note that the new candidate beam may also be simply referred to as a candidate beam.

The UE may determine a beam corresponding to the RS satisfying the certain condition to be a new candidate beam. The UE may determine the new candidate beam, for example, based on RSs of the configured NCBI-RSs for which the L1-RSRP exceeds a threshold. Note that the determination criterion is not limited to the L1-RSRP. The L1-RSRP related to the SSB may be referred to as SS-RSRP. The L1-RSRP related to the CSI-RS may be referred to as CSI-RSRP.

Information related to the NCBI-RS (for example, resources, the number of RSs, the number of ports, precoding, and so on for the RS), information related to the new candidate beam identification (NCBI) (for example, the above-described threshold), and the like may be configured for (reported to) the UE by using higher layer signaling or the like. The information related to the NCBI-RS may be acquired based on information related to the BFD-RS. The information related to the NCBI-RS may be referred to as information related to an NCBI resource and so on.

Note that the BFD-RS, NCBI-RS, or the like may be interpreted as a radio link monitoring reference signal (RLM-RS (Radio Link Monitoring RS).

In step S104, the UE, having identified the new candidate beam, transmits a beam failure recovery request (BFRQ). The beam recovery request may be referred to as a beam recovery request signal, a beam failure recovery request signal, and so on.

The BFRQ may be transmitted by using at least one of, for example, an uplink control channel (PUCCH (Physical Uplink Control Channel)), a random access channel (PRACH (Physical Random Access Channel)), an uplink shared channel (PUSCH (Physical Uplink Shared Channel)), and a configured grant PUSCH.

The BFRQ may include information regarding the new candidate beam identified in step S103. A resource for the BFRQ may be associated with the new candidate beam. Information regarding the beam may be reported by using a beam index (BI), a port index of a certain reference signal, a resource index (for example, a CRI (CSI-RS resource indicator), an SSB resource indicator (SSBRI), and so on.

In Rel-15 NR, studies have been conducted about a CB-BFR (Contention-Based BFR) corresponding to a BFR based on a contention-based random access (RA) procedure and CF-BFR (Contention-Free BFR) corresponding to a BFR based on a contention-free random access procedure. In the CB-BFR and the CF-BFR, the UE may use a PRACH resource to perform transmission by using a preamble (also referred to as an RA preamble, a random access channel (PRACH (Physical Random Access Channel)), a RACH preamble, and so on) as a BFRQ.

In the CB-BFR, the UE may transmit a preamble randomly selected from one or a plurality of preambles. On the other hand, in the CF-BFR, the UE may transmit a UE-specific preamble allocated by the base station. In the CB-BFR, the base station may allocate an identical preamble to a plurality of UEs. In the CF-BFR, the base station may allocate a UE-specific preamble.

Note that the CB-BFR and the CF-BFR may be respectively referred to as a CB PRACH-based BFR (CBRA-BFR (contention-based PRACH-based BFR)) and a CF PRACH-based BFR (CFRA-BFR (contention-free PRACH-based BFR)). The CBRA-BFR may be referred to as CBRA for BFR. The CFRA-BFR may be referred to as CFRA for BFR.

In both CB-BFR and CF-BFR, information related to the PRACH resource (RA preamble) may be reported by using higher layer signaling (RRC signaling or the like), for example. For example, the information may include information indicating a correspondence relationship between the DL-RS (beam) detected and the PRACH resource, and the DL-RS may be associated with the PRACH resource varying with DL-RS.

In step S105, the base station detects a BFRQ and then transmits a response signal to the BFRQ from the UE (the response signal may be referred to as a gNB response and so on). The response signal may include reconfiguration information for one or a plurality of beams (for example, configuration information regarding the DL-RS resource).

The response signal may be transmitted, for example, in a UE common search space for the PDCCH. The response signal may be reported by using the PDCCH (DCI) with a cyclic redundancy check (CRC) scrambled with the identifier of the UE (for example, a cell-radio RNTI (C-RNTI)). The UE may determine at least one of the transmit beam and receive beam used, based on the beam reconfiguration information.

The UE may monitor the response signal, based on at least one of a control resource set (CORESET) for BFR and a search space set for BFR.

For the CB-BFR, contention resolution may be determined to be successful in a case where the UE receives the PDCCH corresponding to the C-RNTI related to the UE.

For the processing in step S105, a period may be configured during which the UE monitors a response to the BFRQ transmitted from the base station (for example, a gNB). The period may be referred to as, for example, a gNB response window, a gNB window, a beam recovery request response window, and so on. In a case of detecting no gNB response during the window period, the UE may retransmit a BFRQ.

In step S106, the UE may transmit, to the base station, a message indicating that the beam reconfiguration is complete. The message may be, for example, transmitted by using the PUCCH or transmitted by using the PUSCH.

A beam recovery success (BR success) may represent, for example, a case where step S106 is reached. On the other hand, a beam recovery failure (BR failure) may correspond to, for example, the number of BFRQ transmissions having reached a certain value or a beam-failure-recovery-timer having expired.

Note that these step numbers are only numbers for description and that a plurality of steps may be brought together or the number of the steps may be changed. Whether the BFR is performed or not may be configured for the UE by using higher layer signaling.

In a case that the beam to apply to transmission and the beam to apply to reception match in the base station, or the like, it may be referred to as having (supporting) beam correspondence. On the other hand, in a case that the beam to apply to transmission and the beam to apply to reception do not match in the base station or the like, it may be referred to as not having (not supporting) beam correspondence.

The beam to apply to transmission and the beam to apply to reception matching is not limited to the case in which the beam to apply to transmission and the beam to apply to reception completely match, but includes a case in which the beam to apply to transmission and the beam to apply to reception match in a certain acceptable level. Note that the beam correspondence may be referred to as transmit/receive beam correspondence (Tx/Rx beam correspondence), beam reciprocity, beam calibration, calibrated/non-calibrated, reciprocity calibrated/non-calibrated, correspondence degree, concordance degree, simply correspondence, or the like.

In a case that the base station has beam correspondence, the beam to apply to the transmission of the DL signal/channel in the base station and the beam to apply to the reception of the UL signal transmitted by the UE match. Thus, by knowing the DL signal/channel (or a beam) by which the reception characteristics (for example, received power) is high in the UE, the base station can determine a beam that is suitable for the transmission and/or reception with the UE.

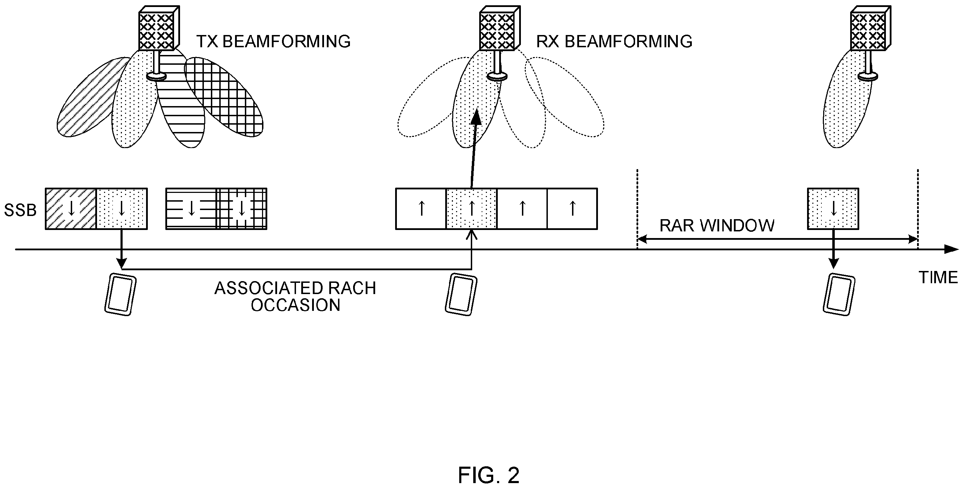

For example, the base station transmits a plurality of synchronization signal blocks (SSB) or CSI-RSs by using different DL resources (or DL beams) in a time direction (see FIG. 2). The UE may select a certain SSB based on the reception characteristics (for example, received power) or the like, and perform the random access procedure (transmission of the preamble part and the message part) in the first step by using the RACH occasion (or UL resource, UL beam) associated with the certain SSB.

The base station performs receiving process for each UL resource associated with each SSB, and determines a certain beam that is suitable for the DL and the UL, based on the UL resource used for the transmission from the UE.

On the other hand, in a case that the base station does not have beam correspondence, the beam to apply to the transmission of the DL signal/channel in the base station and the beam to apply to the reception of the UL signal/channel transmitted by the UE do not match (or link). By knowing the DL signal/channel by which the reception characteristics (for example, received power) is high in the UE, the base station can determine a beam that is suitable for the DL transmission. Furthermore, by knowing the UL signal/channel (or a beam) by which the reception characteristics are high among UL signals/channels transmitted from the UE, the base station can determine a beam that is suitable for the reception of the UL.

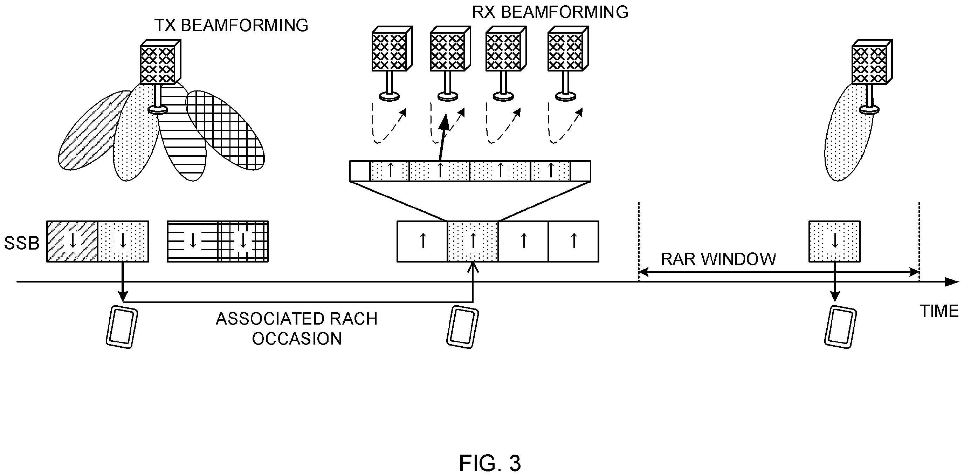

For example, the base station transmits a plurality of SSBs or CSI-RSs by using different DL resources (or DL beams) in a time direction (see FIG. 3). The UE selects a certain SSB based on the reception characteristics (for example, received power) or the like, and performs the random access procedure (transmission of the preamble part and the message part) in the first step by using the RACH occasion (or UL resource, UL beam) associated with the certain SSB. Furthermore, the UE may perform UL transmission for each of the plurality of symbols as UL resources.

The base station performs receiving process for each UL resource associated with each SSB, and determines a certain transmit beam that is suitable for the DL, based on the UL resource used for the transmission from the UE. Furthermore, the base station determines a certain receive beam that is suitable for the UL, based on the reception characteristics of the UL signal transmitted at every certain period (for example, a symbol(s)) in the UL resource associated with the certain SSB.

Alternatively, as described above, in Rel-15 NR, the beam recovery is triggered in a case that the quality of all the BFD-RSs is less than a certain threshold value (failure occurs in all beams). Because it is expected that there is no UL beam (UL link) that is available to the UE in a case that all beams are defective, in the BFR that has been studied so far, BFRQ is transmitted by using a PRACH.

However, there is a problem that delay occurs until a beam recovery in order to transmit a beam recovery request by using a limited PRACH resource (RACH occasion). As a result, communication throughput might be reduced.

Thus, the inventors of the present invention came up with the idea of a method to improve performance in the beam recovery. For example, the inventors of the present invention came up with the idea of a method to reduce delay of the beam recovery.

Embodiments according to the present disclosure will be described below in detail with reference to the drawings. The radio communication method according to each embodiment may be employed independently or may be employed in combination.

Note that "assume" in the present disclosure may mean to perform a receiving process, a transmission process, a measurement process, and the like.

### (First Aspect)

The UE may transmit a beam recovery request by using the PUCCH.

For the future radio communication systems (for example, LTE Rel. 15 or later versions, 5G, NR, and the like), studies have been conducted about a configuration (also referred to as a format, a PUCCH format (PF), or the like) for an uplink control channel used to transmit the UCI (for example, the PUCCH). For example, for Rel. 15, support of five types PF0 to PF4 has been under study. Note that the names of PF shown below are only illustrative and that different names may be used.

For example, PF0 and PF1 are PFs used to transmit UCI (also referred to as, for example, transmission confirmation information (HARQ-ACK (Hybrid Automatic Repeat reQuest-Acknowledge)), ACK, NACK, or the like) of up to 2 bits. PF0 can be allocated to one or two symbols and is thus also referred to as a short PUCCH, a sequence-based short PUCCH, or the like. On the other hand, PF1 can be allocated to 4 to 14 symbols and is thus referred to as a long PUCCH and so on. For PF1, block-wise spreading in the time domain using at least one of CS and OCC may be used to multiplex a plurality of user terminals in code division multiplexing (CDM) within an identical physical resource block (PRB or referred to as a resource block (RB) and so on).

PF2 to PF4 are PFs used to transmit UCI (for example, channel state information (CSI) or CSI and HARQ-ACK and/or a scheduling request (SR)) of more than 2 bits. PF2 can be allocated to one or two symbols and is thus referred to as a short PUCCH and so on. On the other hand, PF3 and PF4 can be allocated to 4 to 14 symbols and is thus referred to as a long PUCCH and so on. For PF4, block-wise spreading before DFT (frequency domain) may be used to multiplex a plurality of user terminals in CDM.

The NW (network, for example, a gNB, an eNB, or a base station) can assign PUCCH resources to all UL symbols. There are more symbols that can be assigned to the PUCCH than the symbols of the RACH occasion.

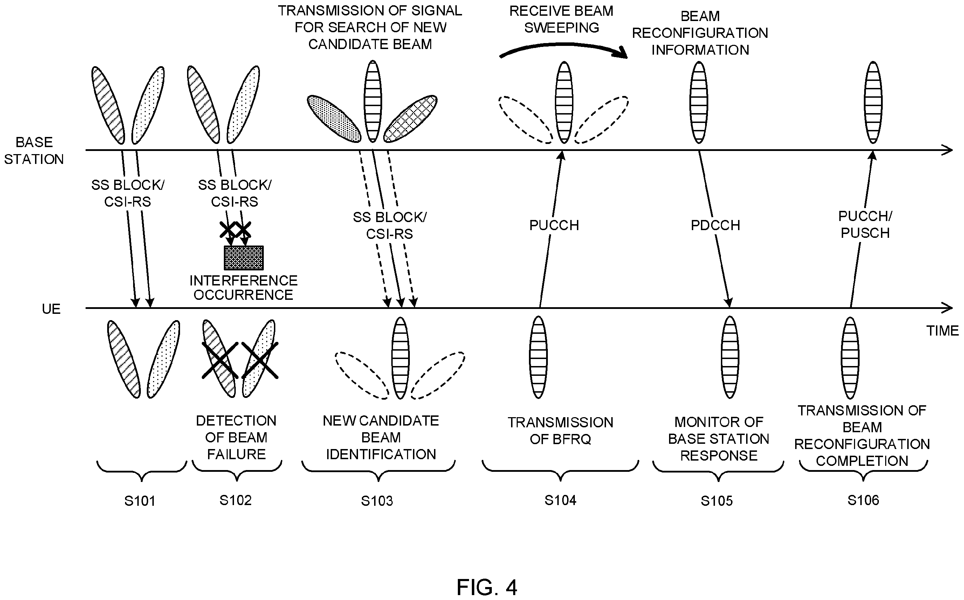

In terms of the beam recovery procedure (see FIG. 4) according to a First Aspect, the difference from the existing beam recovery procedure (see FIG. 1) will be described.

In step S102, the certain condition to detect beam failure may be that the measured value in all beams is less than the threshold value, or may be that the measured value in some particular beams is less than the threshold value (partial beam failure). The measured value may be at least one of L1-RSRP, received power, SINR, SNR, and BER.

In step S103, the reference for selection of the new candidate beam may be at least one of L1-RSRP, RSRQ, SINR, SNR, and interference power. In the case of partial beam failure, the UE may select a beam (alive beam) that does not have partial beam failure as a new candidate beam.

In step S104, the UE transmits a beam recovery request by using the PUCCH.

By using the PUCCH for the beam recovery request, the transmission opportunity of the beam recovery request can be improved. The delay of the beam recovery can be made small.

The UE may be configured with a plurality of PUCCH resources for the beam recovery request. In a case of having detected a beam failure, the UE may select a PUCCH resource from the plurality of PUCCH resources, and performs the PUCCH transmission by using the selected PUCCH resource.

In a case of using PUCCH format 1, one PRB and one symbol can be multiplexed with PUCCHs of 12 UEs.

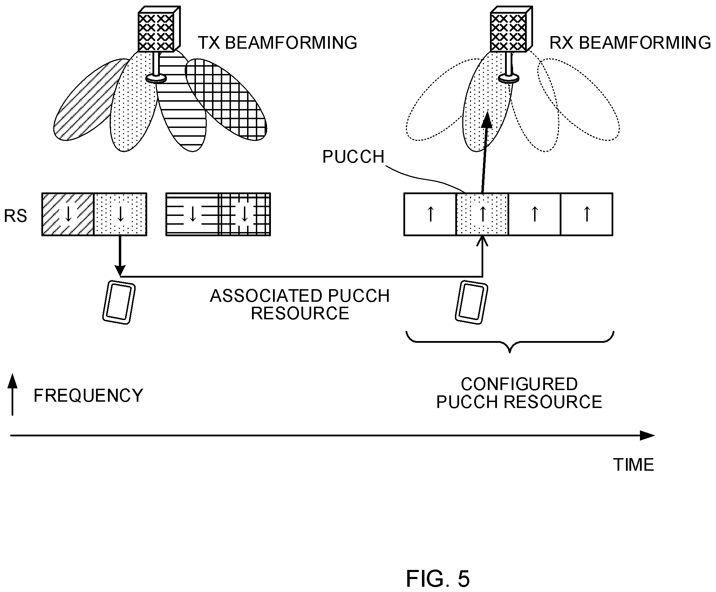

As shown in FIG. 5, in a case that the base station transmits a plurality of RSs (for example, at least one of SSB and CSI-RS) by using a plurality of transmit beams, a plurality of PUCCH resources corresponding to each of the plurality of RSs may be configured for the UE by higher layer signaling. The plurality of PUCCH resources may have different time resources (symbols). In this way, the UE may transmit the beam recovery request by using the PUCCH resource (symbol) corresponding to the selected RS (base station transmit beam, new candidate beam).

In a case that the UE measures four RSs (base station transmit beams), two slots are necessary for the beam recovery request in a case that the RACH occasion in one slot is two symbols. On the other hand, as shown in FIG. 5, by configuring four PUCCH resources in one slot for the UE, the UE can transmit the beam recovery request in one slot and can speed up the beam recovery.

The UE may report the selected RS by ON/OFF of the PUCCH in each of the plurality of time resources configured for the PUCCH. In other words, the UE may transmit the PUCCH only in the time resources corresponding to the selected RS among the plurality of time resources configured for the PUCCH, and need not necessarily transmit the PUCCH in other time resources. The base station may determine the RS (base station transmit beam, new candidate beam) selected by the UE, based on the time resource in which the PUCCH is received among the plurality of time resources configured for the PUCCH.

The PUCCH for the beam recovery request may be a short PUCCH. For example, the PUCCH may use PUCCH format 0. The number of symbols of the PUCCH may be any one of 1, 2, 3, 4, and so on.

The PUCCH for the beam recovery request may be a long PUCCH. For example, the PUCCH may use PUCCH format 1. The number of symbols of the PUCCH may be any one of 2, 3, 4, and so on.

### <Channel Structure>

PUCCH format 0 in Rel. 15 uses one PRB for the bandwidth. PUCCH format 0 used for the beam recovery request may use more than one PRB for the bandwidth.

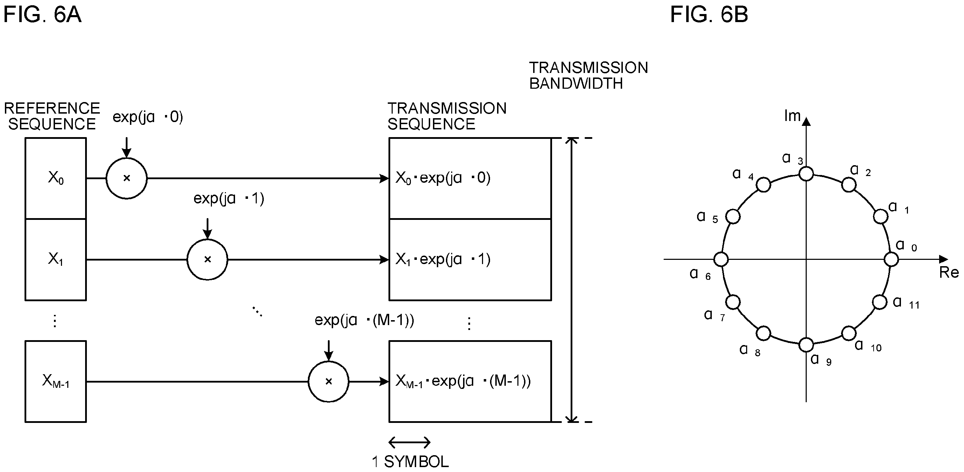

As shown in FIG. 6A, in a case that the transmission bandwidth of PUCCH format 0 is M subcarriers (Resource Elements (RE)), the UE generates a transmission sequence having the sequence length of M by applying cyclic shift (CS), phase rotation) to a base sequence having the sequence length of M.

By M CSs (α₀, α₁, ..., α_{M-1}) being assigned to different UEs (UE #1, UE #2, ..., UE #M-1), the PUCCH of up to M UEs may be multiplexed. As shown in FIG. 6B, in a case that the transmission bandwidth is one PRB (M = 12), by different CSs (α₀, α₁, ..., α₁₁) being assigned to different UEs (UE #1, UE #2, ..., UE #12), the PUCCH of up to 12 UEs may be multiplexed. A different CS may be configured for the UE by a different initial CS index (initial cyclic shift). The initial CS index may be included in a PUCCH resource configured by higher layer signaling.

The UE may transmit a beam recovery request by using a short PUCCH or a long PUCCH (for example, PUCCH format 0 or PUCCH format 1) .

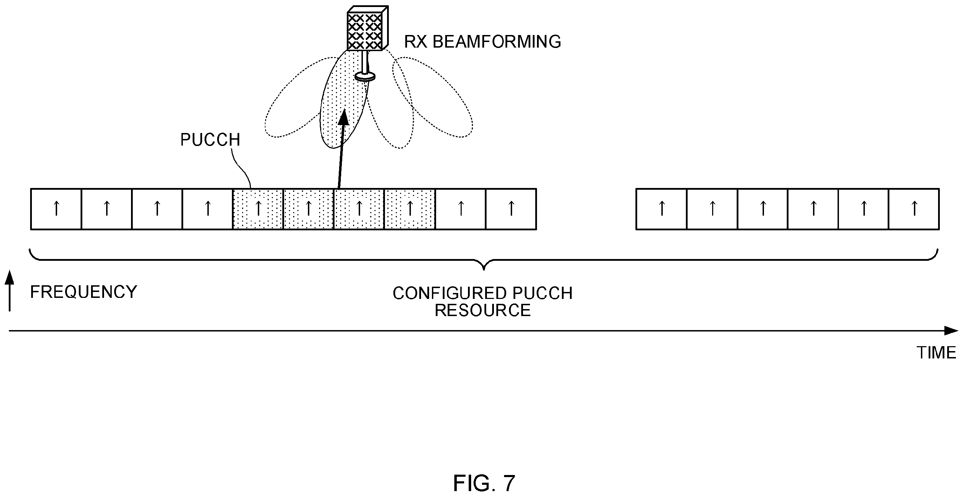

As shown in FIG. 7, the UE may be configured with a PUCCH of more than one symbol for each beam. In this case, it is possible to improve coverage in comparison with a PUCCH of one symbol.

The plurality of time resources (for example, at least one symbol) configured for the PUCCH may correspond to a plurality of RSs used for the measurement of the beam. The plurality of time resources need not necessarily be continuous in the time domain. The plurality of time resources may be in one slot or may be over a plurality of slots.

The UE may transmit the same information or the same sequence for a plurality of symbols repeatedly. The UE may apply at least one of the reference sequence hopping and the CS hopping to the repeated transmission.

The UE may apply frequency hopping to the PUCCH. The UE may be configured with the PRB index for the first hop (1st hop) in the frequency hopping and the PRB index for the second hop (2nd hop) as the PUCCH resource.

The UE may perform frequency hopping of the PUCCH according to one of the following frequency hopping methods 1 and 2.

### [[Frequency Hopping Method 1]]

The frequency hopping may be constituted of two hops. The UE may assume that the number of symbols of the first hop is floor (number of PUCCH symbols/2), and the number of symbols of the second hop is ceil (number of PUCCH symbols/2).

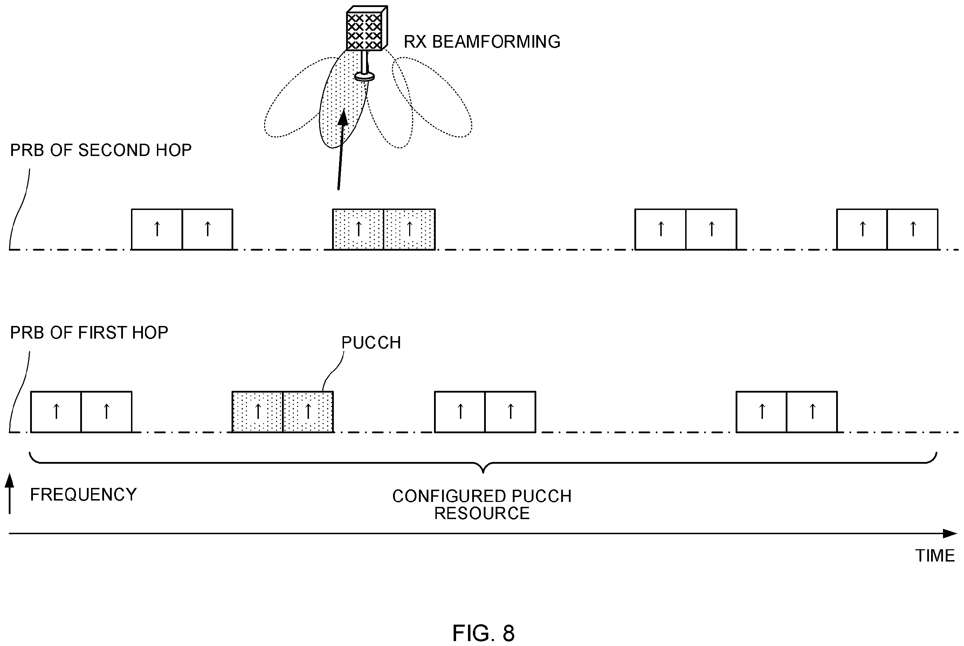

For example, as in FIG. 8, in a case that 4 is configured as the number of PUCCH symbols for the UE, the UE determines that the number of symbols of the first hop is 2, and the number of symbols of the second hop is 2.

### [[Frequency Hopping Method 2]]

The frequency hopping may be constituted of more than two hops. The UE may assume that the PRB index of an odd-numbered hop is the PRB index of the first hop, and the PRB index of an even-numbered hop is the PRB index of the second hop.

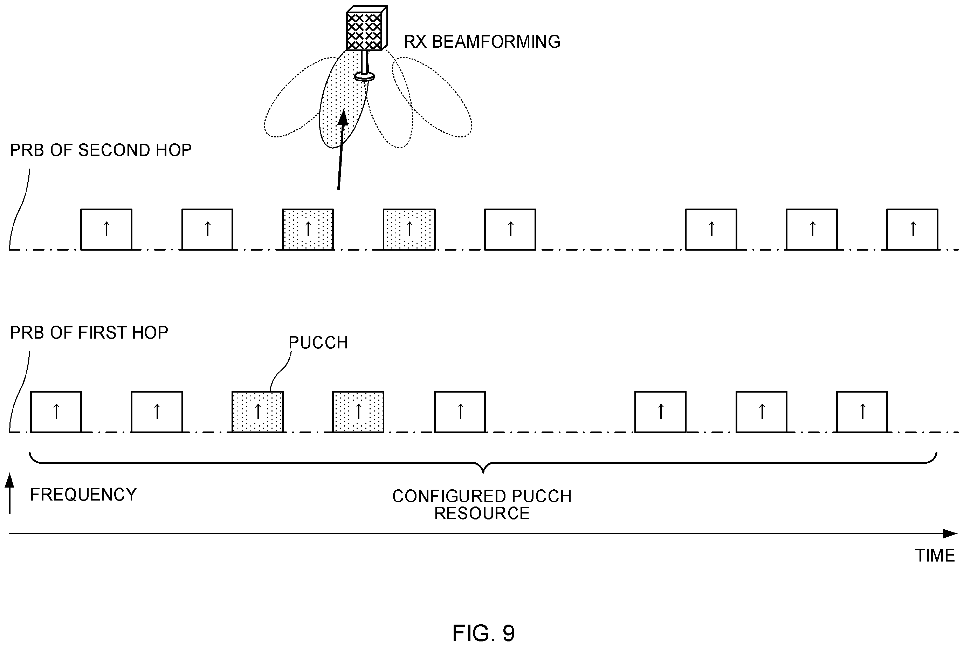

For example, as in FIG. 9, in a case that the frequency hopping is constituted of four hops, the UE applies the PRB index of the first hop to the first hop and the third hop, and applies the PRB index of the second hop to the second hop and the fourth hop.

PUCCH format 0 may support more than two symbols. PUCCH format 0 in Rel. 15 has one or two symbols. By supporting PUCCH format 0 of more than two symbols, all the transmit power is used for the information transmission, and thus the coverage can be improved.

### <PUCCH Format Determination Method>

The UE may determine the PUCCH format according to at least one of the following PUCCH format determination methods 1 to 4.

### [[PUCCH Format Determination Method 1]]

The UE may determine the PUCCH format by the number of PUCCH symbols.

In a case that the number of PUCCH symbols is equal to or less than 2, the UE may use PUCCH format 0 for the beam recovery request. In a case that the number of PUCCH symbols is equal to or greater than 4, the UE may use PUCCH format 1 for the beam recovery request.

### [[PUCCH Format Determination Method 2]]

The UE may use a PUCCH format configured in advance for the beam recovery request.

The UE may use a PUCCH format configured in advance of PUCCH format 0 or 1 for the beam recovery request regardless of the number of PUCCH symbols.

Because PUCCH format 0 uses all the transmit power in the UCI (does not use the DMRS), the error rate can be lowered, and the coverage that is larger than PUCCH format 1 of the same number of symbols can be obtained. PUCCH format 1 can obtain the multiplexing capacity that is greater than PUCCH format 0 by time domain orthogonal cover code, and the resource utilization efficiency can be increased.

### [[PUCCH Format Determination Method 3]]

The UE may use the PUCCH format configured by higher layer (for example, RRC) signaling for the beam recovery request.

The UE may be configured with PUCCH format 0 or 1 by the higher layer signaling for the beam recovery request regardless of the number of PUCCH symbols. The NW may configure the PUCCH format for the UE in consideration of the effect of PUCCH format 0 and the effect of PUCCH format 1 in PUCCH format determination method 2.

### [[PUCCH Format Determination Method 4]]

The UE may use the PUCCH format configured by system information (for example, RMSI (Remaining Minimum System Information)) for the beam recovery request.

The UE may assume that the number of symbols of the PUCCH for the beam recovery request is the same as the number of symbols of the PUCCH before the RRC configuration. Because the cell coverage is limited by the PUCCH before the RRC configuration, the number of symbols of the PUCCH for the beam recovery request is sufficient with the number of symbols of the PUCCH before the RRC configuration.

According to the First Aspect, by configuring symbols more than those of the RACH occasion as the PUCCH resource, it is possible to reduce the overhead of the beam recovery request.

Furthermore, by the increase in the number of PUCCH symbols, it is possible to improve the coverage. By multiplexing the PUCCH of a plurality of UEs, it is possible to improve the utilization efficiency of the resource.

### (Second Aspect)

The UE may transmit the beam recovery request by using at least one of the PUSCH and the DMRS.

In a case of detecting a beam failure, the UE may transmit at least one of the beam recovery request and the beam measurement result on the PUSCH. The beam measurement result may indicate at least one of L1-RSRP, RSRQ, SINR, SNR, and interference power. The NW may obtain the beam measurement result together with the beam recovery request. In this way, it is possible to reduce time of the beam selection or the beam recovery.

The PUSCH may be a grant (dynamic grant, DCI for the scheduling) based PUSCH (the resource may be configured by the DCI). In a case of detecting a beam failure, the UE may transmit a grant based PUSCH.

The PUSCH may be a configuration grant (configured grant) based PUSCH (the resource may be configured by higher layer signaling). The UE may be configured with a PUSCH resource for the beam recovery request semi-statically by higher layer signaling. In a case of detecting a beam failure, the UE may transmit configuration grant based PUSCH (type 1 or type 2).

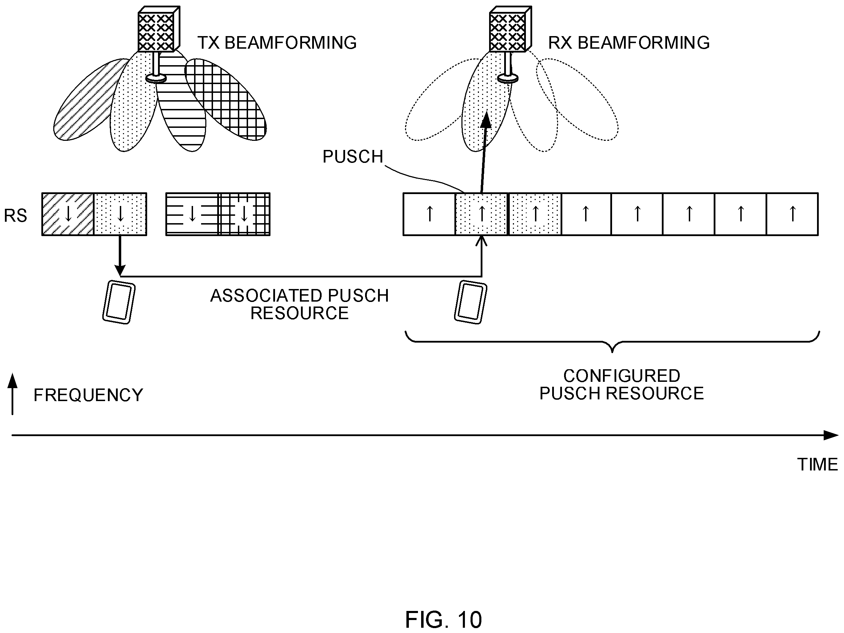

As shown in FIG. 10, in a case that the base station transmits a plurality of RSs (for example, at least one of SSB and CSI-RS) by using a plurality of transmit beams, a plurality of PUSCH resources corresponding to each of the plurality of RSs may be configured for the UE by higher layer signaling. The plurality of PUSCH resources may have different time resources (symbols). In this way, the UE may transmit the beam recovery request by using the PUSCH resource (symbol) corresponding to the selected RS (base station transmit beam, new candidate beam).

In a case that one PUSCH resource is configured for the UE, the UE may transmit data including the information (index) indicating the selected RS by using the PUSCH resource.

The UE may transmit the beam recovery request by using a DMRS for the PUSCH.

In a case of detecting a beam failure, the UE may determine at least one of a reference sequence index (for example, v) and a CS index (for example, offset m_{cs} for the initial CS index) of the DMRS for the PUSCH, and transmit the PUSCH.

For example, #0 may be configured as the CS index of the DMRS for the PUSCH. In a case of not detecting a beam failure, the UE may transmit the PUSCH by using CS index #0 of the DMRS. In a case of detecting a beam failure, the UE may transmit the PUSCH by using the CS index in which a certain value (CS index interval) is added to CS index #0. For example, the CS index interval is 6.

In a case of detecting a beam failure, the UE may transmit the beam recovery request by the DMRS for the PUSCH and transmit the beam measurement result by data (DL-SCH) of the PUSCH.

The UE may be configured whether or not to transmit the beam measurement result by higher layer signaling. In a case of being configured to transmit the beam measurement result, the UE may transmit the beam recovery request by the DMRS for the PUSCH and transmit the beam measurement result by the data of the PUSCH. In a case of not being configured to transmit the beam measurement result, the UE may transmit the beam recovery request by the DMRS for the PUSCH and may not transmit the beam measurement result by the data of the PUSCH.

In a case that a plurality of PUSCH resources corresponding to a plurality of respective RSs are configured for the UE, the UE may transmit, in the PUSCH resource corresponding to a selected RS, the measurement result of the RS.

In a case that one PUSCH resource is configured for the UE, the UE may transmit data including the information (index, for example, SSB index, CSI-RS ID) indicating the selected RS and the measurement result of the RS as the data of the PUSCH by using the PUSCH resource.

The data transmitted by the PUSCH may include a certain number of measurement results sequentially from the best measurement result among the measurement results of the plurality of RSs, or may include difference between the best measurement result and another measurement result.

According to a Second Aspect, by configuring symbols more than those of the RACH occasion as the PUSCH resource, it is possible to reduce the overhead of the beam recovery request.

Furthermore, by the UE transmitting the beam recovery request by the DMRS of the PUSCH, it is possible to improve the utilization efficiency of the resource.

### (Third Aspect)

The UE may transmit at least one of the beam recovery request and the beam measurement result by using specific subcarrier spacing (SCS). The specific SCS may be higher than the SCS of the signal for the beam measurement or the DL channel, or may be higher than the SCS of an existing beam recovery request (RACH).

In a case of detecting a beam failure, the UE may select a UL channel resource, and transmit the UL channel by using the specific SCS. The UL channel may be one of PUCCH, PUSCH, and RACH. The UE may transmit the beam recovery request by using the specific SCS that is higher than the SCS used for the measurement of the beam.

The UE may determine the specific SCS according to one of the following SCS determination methods 1 and 2.

### [[SCS Determination Method 1]]

The UE may derive (determine) the specific SCS implicitly (the specific SCS does not need to be configured explicitly). The UE may determine N times of the SCS of the signal for the beam measurement or the DL channel as the specific SCS. For example, N may be 2, 4, 8, or the like.

### [[SCS Determination Method 2]]

The UE may be configured with the specific SCS by higher layer signaling and broadcast information (for example, PBCH). At least one of the PUCCH resource and the PUSCH resource may include the specific SCS.

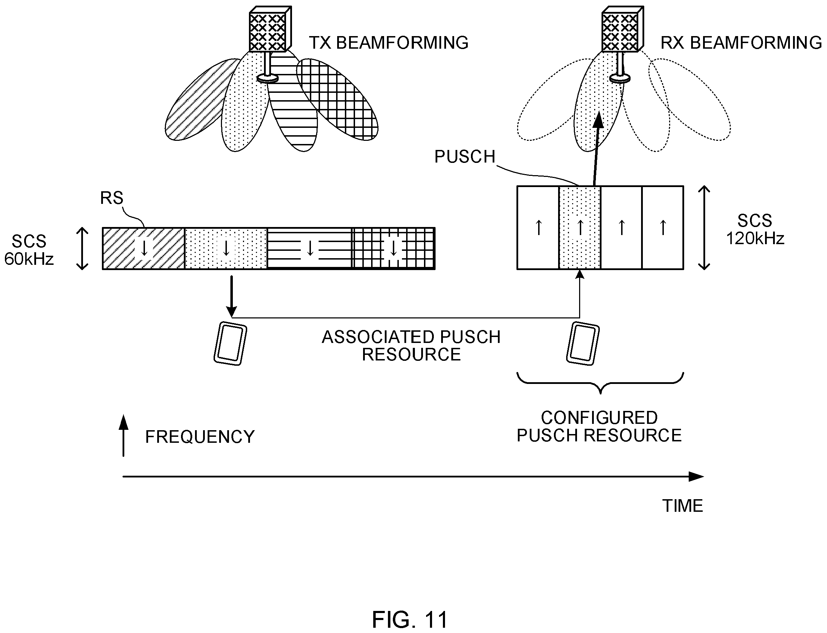

As shown in FIG. 11, the UE may transmit the beam recovery request by the PUCCH by using the specific SCS (120 kHz) twice as large as the SCS (60 kHz) for the beam measurement. For example, in a case that the beam recovery request for four beams is necessary and the UL period in one slot is two symbols in the SCS (60 kHz) for the beam measurement, if the UE transmits the beam recovery request by using the SCS for the beam measurement, the time resource that is necessary for the beam recovery request is two slots. Here, by using the specific SCS twice as large as the SCS for the beam measurement, the UE can reduce the time resource that is necessary for the beam recovery request to one slot.

According to a Third Aspect, by transmitting the beam recovery request by using a higher SCS, it is possible to reduce the overhead of the beam recovery request.

### (Fourth Aspect)

The UE may be configured whether to apply low delay beam recovery or to apply normal beam recovery to all SCells, by higher layer signaling. The UE may be configured whether to apply low delay beam recovery or to apply normal beam recovery for each cell by higher layer signaling.

The low delay beam recovery may be beam recovery using one of the First to Third Aspects. The normal beam recovery may be beam recovery of Rel. 15.

The low delay beam recovery may be applied only to SCells (cells except for PCell, PSCell). The normal beam recovery may be applied to other cells (PCell, PSCell).

In a case that the serving cell is an SCell, the UE may apply the low delay beam recovery, and in a case that the serving cell is not an SCell, the UE may apply the normal beam recovery.

According to a Fourth Aspect, the UE can reduce the overhead of the beam recovery in an SCell.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

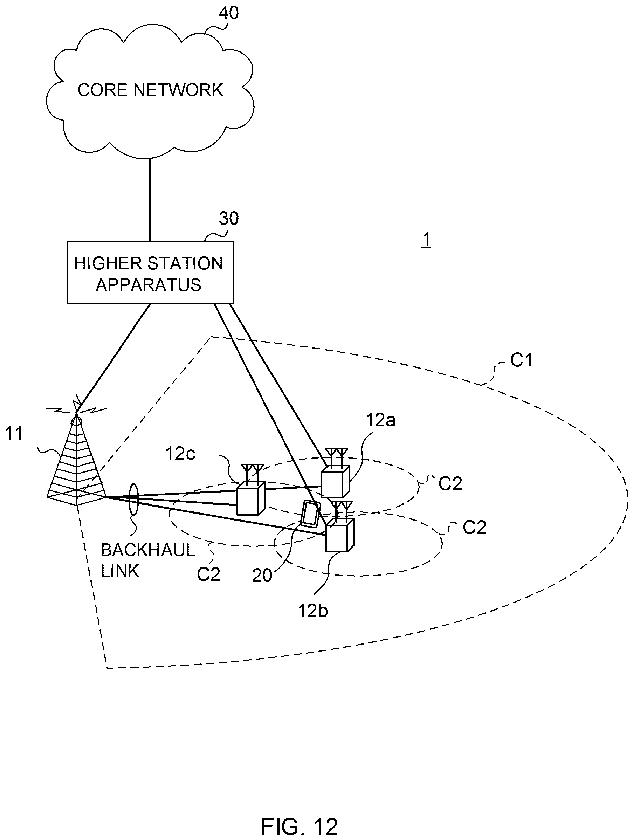

FIG. 12 is a diagram to show an example of a schematic structure of the radio communication system according to one embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a base station 11 that forms a macro cell C1 of a relatively wide coverage, and base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the base station 11 and the base stations 12. It is assumed that the user terminals 20 use the macro cell C1 and the small cells C2 at the same time by means of CA or DC. The user terminals 20 can execute CA or DC by using a plurality of cells (CCs).

Between the user terminals 20 and the base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the base stations 12, a carrier of a relatively high frequency band (for example, 3.5 GHz, 5 GHz, and so on) and a wide bandwidth may be used, or the same carrier as that used between the user terminals 20 and the base station 11 may be used. Note that the structure of the frequency band for use in each base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a certain signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if certain physical channels use different subcarrier spacings of the OFDM symbols constituted and/or different numbers of the OFDM symbols, it may be referred to as that the numerologies are different.

A wired connection (for example, means in compliance with the CPRI (Common Public Radio Interface) such as an optical fiber, an X2 interface and so on) or a wireless connection may be established between the base station 11 and the base stations 12 (or between two base stations 12).

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," a "central node," an "eNB (eNodeB)," a "transmitting/receiving point" and so on. The base stations 12 are base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the base stations 11 and 12 will be collectively referred to as "base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Base Station)

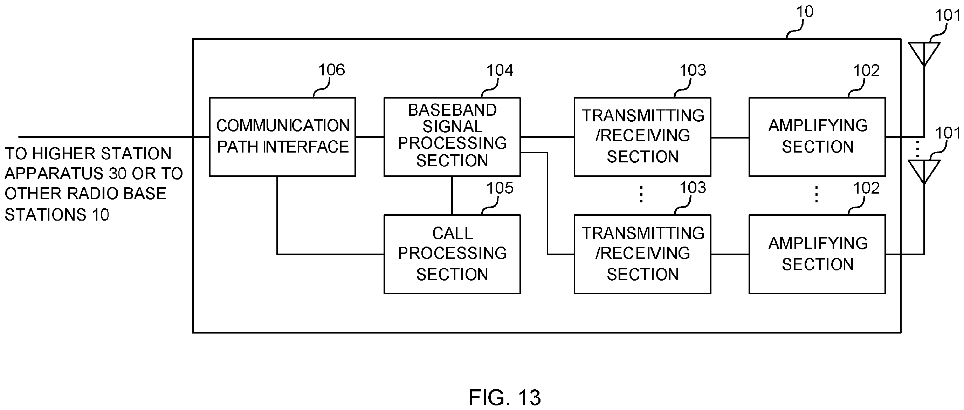

FIG. 13 is a diagram to show an example of an overall structure of the base station according to one embodiment. A base station 10 includes a plurality of transmitting/receiving antennas 101, amplifying sections 102, transmitting/receiving sections 103, a baseband signal processing section 104, a call processing section 105 and a communication path interface 106. Note that the base station 10 may be configured to include one or more transmitting/receiving antennas 101, one or more amplifying sections 102 and one or more transmitting/receiving sections 103.

User data to be transmitted from the base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the base station 10, manages the radio resources and so on.

The communication path interface 106 transmits and/or receives signals to and/or from the higher station apparatus 30 via a certain interface. The communication path interface 106 may transmit and/or receive signals (backhaul signaling) with other base stations 10 via an inter-base station interface (for example, an optical fiber in compliance with the CPRI (Common Public Radio Interface) and an X2 interface).

Note that the transmitting/receiving section 103 may further include an analog beamforming section that performs analog beamforming. The analog beamforming section may be constituted of an analog beamforming circuit (for example, a phase shifter, a phase shift circuit) or an analog beamforming apparatus (for example, a phase shift device) described based on the common understanding in the technical field according to the present invention. Furthermore, the transmitting/receiving antennas 101 may be constituted of, for example, array antennas.

Furthermore, the transmitting/receiving section 103 may transmit a measurement signal (for example, RS, SSB, CSI-RS, or the like) by using a beam. Furthermore, the transmitting/receiving section 103 may receive a beam recovery request.

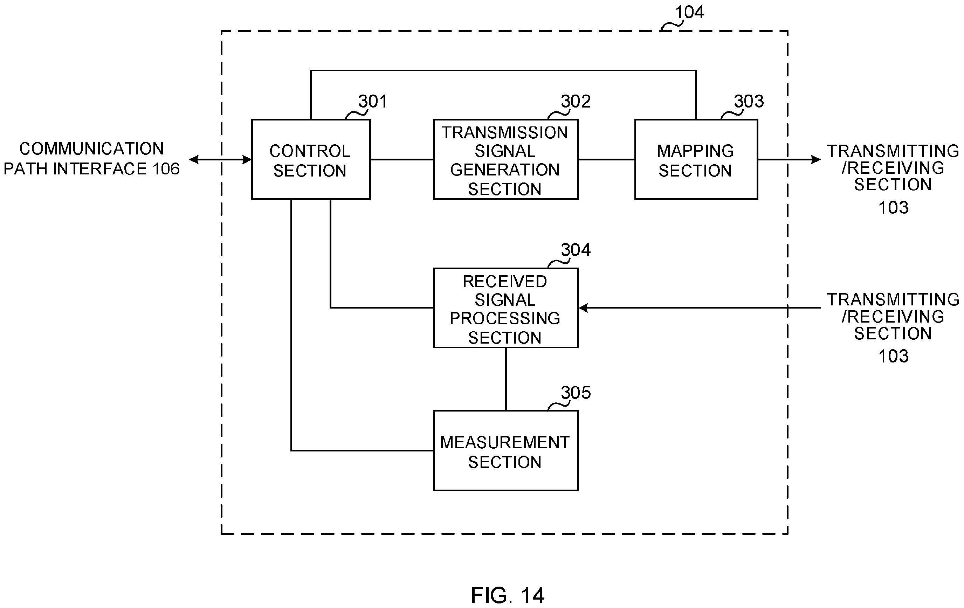

FIG. 14 is a diagram to show an example of a functional structure of the base station according to one embodiment. Note that, the present example primarily shows functional blocks that pertain to characteristic parts of the present embodiment, and it is assumed that the base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the base station 10, and some or all of the structures do not need to be included in the baseband signal processing section 104.

The control section (scheduler) 301 controls the whole of the base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH, transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH, transmission confirmation information, and so on), a random access preamble (for example, a signal transmitted on the PRACH), an uplink reference signal, and so on.

The control section 301 may perform control to form a transmit beam and/or receive beam by using digital BF (for example, precoding) in the baseband signal processing section 104 and/or analog BF (for example, phase rotation) in the transmitting/receiving section 103. The control section 301 may perform control to form a beam, based on downlink channel information, uplink channel information, and the like. These pieces of channel information may be acquired from the received signal processing section 304 and/or the measurement section 305.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

Furthermore, the control section 301 may use at least one of an uplink control channel, an uplink shared channel, and a demodulation reference signal for reception of the beam recovery request.

### (User Terminal)

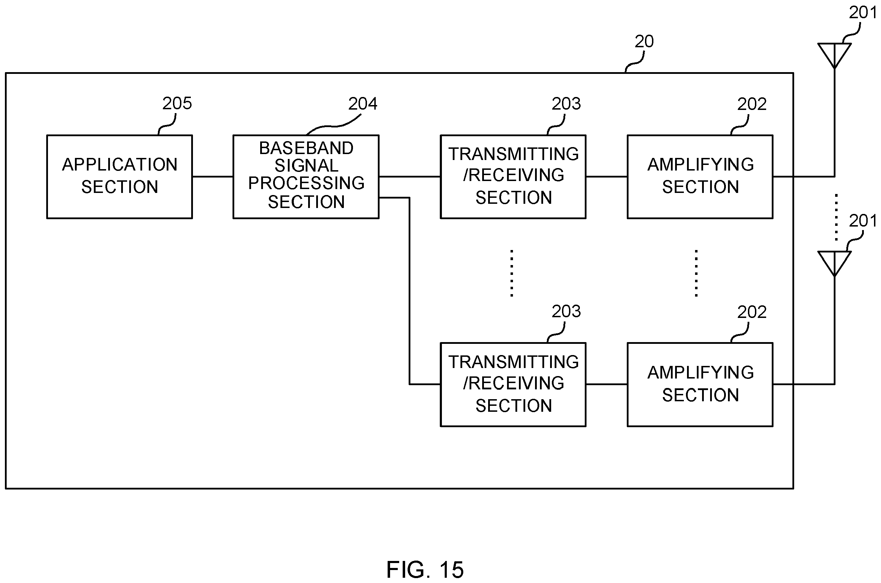

FIG. 15 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include analog beamforming section that performs analog beamforming. The analog beamforming section may be constituted of an analog beamforming circuit (for example, a phase shifter, a phase shift circuit) or an analog beamforming apparatus (for example, a phase shift device) described based on the common understanding in the technical field according to the present invention. The transmitting/receiving antennas 201 may be constituted of, for example, array antennas.

Furthermore, the transmitting/receiving section 203 may receive a measurement signal (for example, RS, SSB, CSI-RS, or the like) transmitted by using a beam. Furthermore, the transmitting/receiving section 203 may transmit at least one of the beam recovery request and the measurement result.

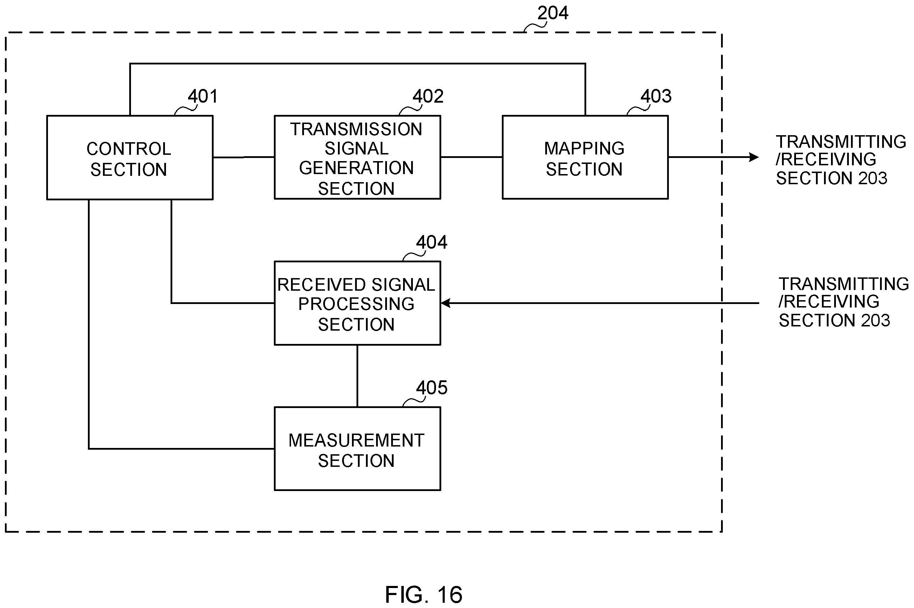

FIG. 16 is a diagram to show an example of a functional structure of a user terminal according to one embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may perform control to form a transmit beam and/or receive beam by using digital BF (for example, precoding) in the baseband signal processing section 204 and/or analog BF (for example, phase rotation) in the transmitting/receiving section 203. The control section 401 may perform control to form a beam, based on downlink channel information, uplink channel information, and the like. These pieces of channel information may be acquired from the received signal processing section 404 and/or the measurement section 405.

If the control section 401 acquires a variety of information reported by the base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. For example, the measurement section 405 may perform intra-frequency measurement and/or inter-frequency measurement for one or both of the first carrier and the second carrier. The measurement section 405 may perform the inter-frequency measurement in the second carrier, based on the measurement indication that is acquired from the received signal processing section 404, in a case that the serving cell is included in the first carrier. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

Furthermore, the control section 401 may use at least one of an uplink control channel (PUCCH), an uplink shared channel (PUSCH), and a demodulation reference signal (DMRS) for transmission of the beam recovery request (BFRQ).

Furthermore, the control section 401 may use a time resource based on the measurement result (for example, the RS corresponding to the new candidate beam) of a plurality of measurement signals among a plurality of time resources (for example, PUCCH resources, PUSCH resources) associated with the plurality of respective measurement signals, for the uplink control channel or the uplink shared channel.

Furthermore, the control section 401 may use a sequence (for example, a reference sequence and a sequence based on the CS) depending on the presence or absence of a beam failure in the demodulation reference signal.

Furthermore, the control section 401 may use subcarrier spacing different from the subcarrier spacing used for the measurement, for the beam recovery request.

Furthermore, the control section 401 may use a random access preamble for the beam recovery request in a case of detecting a beam failure in a primary cell or a primary secondary cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus.

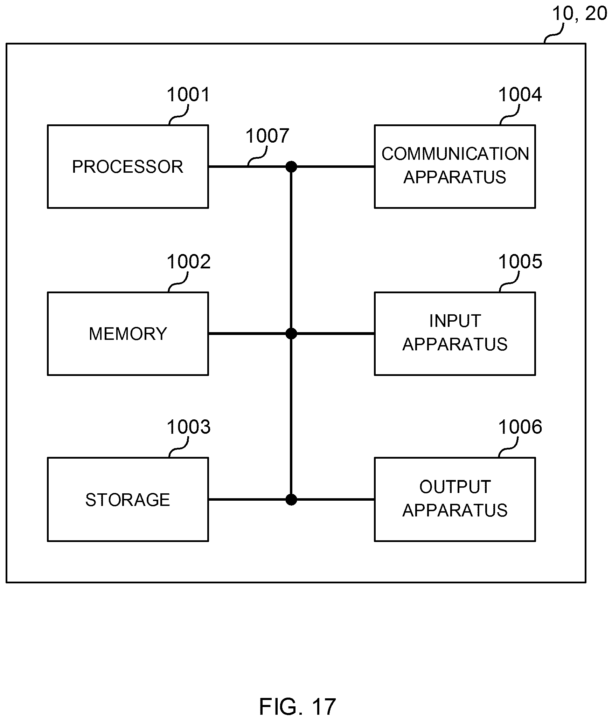

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of symbols of a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, a mini-slot, and a symbol in the present disclosure may be interchangeably interpreted.

For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, codewords, or the like, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG)," a "PRB pair," an "RB pair," and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably.

In the present disclosure, the terms such as "precoding," a "precoder," a "weight (precoding wait)," a "transmit power," "phase rotation," an "antenna port," an "antenna port group," a "layer," "the number of layers," a "rank," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," "terminal," and so on may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," and so on. Note that at least one of a base station and a mobile station may be a device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, next-generation systems that are enhanced based on these, and so on. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, and looking up (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables, printed electrical connections, and so on, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a transmitting section that transmits a beam recovery request; and
a control section that uses at least one of an uplink control channel, an uplink shared channel, and a demodulation reference signal, for transmission of the beam recovery request.

2. The user terminal according to claim 1, wherein
the control section uses a time resource based on a measurement result of a plurality of measurement signals among a plurality of time resources respectively associated with the plurality of measurement signals, for the uplink control channel or the uplink shared channel.

3. The user terminal according to claim 1 or claim 2, wherein
the control section uses a sequence depending on presence or absence of beam failure, in the demodulation reference signal.

4. The user terminal according to any one of claims 1 to 3, wherein
the control section uses subcarrier spacing different from subcarrier spacing used for measurement, for the beam recovery request.

5. The user terminal according to any one of claims 1 to 4, wherein
the control section uses a random access preamble for the beam recovery request in a case of detecting a beam failure in a primary cell or a primary secondary cell.

6. A base station comprising:
a receiving section that receives a beam recovery request; and
a control section that uses at least one of an uplink control channel, an uplink shared channel, and a demodulation reference signal, for reception of the beam recovery request.
